# EUROPÄISCHE PATENTSCHRIFT

(11) **EP 0 708 152 B1**
(45) Veröffentlichungstag und Bekanntmachung des Hinweises auf die Patenterteilung: **03.01.2001**
(21) Anmeldenummer: 95115900.3
(22) Anmeldetag: 09.10.1995
(51) Int. Cl.: C09B 67/00, D06P 1/18

(54) **Mischungen blauer Dispersionsazofarbstoffe**
Mixtures of blue disperse dyes
Mélanges de colorants de dispersions bleus

(30) Priorität: 20.10.1994 DE 4437551
(43) Veröffentlichungstag der Anmeldung: 24.04.1996
(73) Patentinhaber: DyStar Textilfarben GmbH & Co. Deutschland KG, 60318 Frankfurt am Main (DE)
(72) Erfinder: Hamprecht, Rainer, Dr., D-51519 Odenthal (DE); Jordan, Heinz-Dietrich, Dr., D-51377 Leverkusen (DE)

(56) Entgegenhaltungen:
- EP-A- 0 347 685
- EP-A- 0 392 359
- EP-A- 0 475 089

## Beschreibung

Die vorliegende Erfindung betrifft Mischungen von Azofarbstoffen sowie diese enthaltende Präparationen für das Färben von hydrophoben synthetischen Fasern, die sich z.B. als Ersatz für das anthrachinoide C.I. Disperse Blue 56 (C.I.-Nr. 63285) eignen.

Disperse Blue 56 gilt weltweit als bedeutender blauer Dispersionsfarbstoff, da dieser auf den genannten Fasermaterialien zu besonders klaren, rotstichig blauen Färbungen mit hoher Lichtechtheit führt. Andererseits weist dieser Farbstoff eine Reihe von Nachteilen auf.

Wie fast alle Anthrachinonfarbstoffe hat Disperse Blue 56 eine geringe Farbstärke, was insbesondere bei hohen Farbtiefen eine beträchtliche Kostensteigerung zur Folge hat.

Bei der Färbung von Mischungen aus Polyester-Fasern und Wolle, Baumwolle oder Regenerat-Cellulose werden diese Begleitfasern stark angeschmutzt. Diese Anschmutzung läßt sich auch durch eine reduktive Nachbehandlung nicht vollständig entfernen.

Beim Färben mit den modernen Schnellfärbeverfahren besteht die große Gefahr einer unegalen Färbung. Disperse Blue 56 gehört, falls man nicht eine überlange Färbedauer für das nachträgliche Egalisieren zur Anwendung bringt, zu den besonders schlecht egalisierenden Dispersions-Blaufarbstoffen.

Nachteilig ist weiterhin die Empfindlichkeit von Disperse Blue 56 gegenüber Metallionen - insbesondere Kupfer - im Färbebad, weswegen diesem häufig Komplexbildner zugesetzt werden müssen.

Um die Unzulänglichkeiten des Anthrachinonfarbstoffes unter Beibehaltung des Farbtons zumindest teilweise zu beseitigen, sind als "Blau 56-Ersatz" Verschnitte des teuren Anthrachinonfarbstoffs mit preiswerten Azofarbstoffen sowie Mischungen anderer Anthrachinonfarbstoffe mit Azoverbindungen empfohlen worden (vgl. US-A-4 374 642). Desweiteren wurde bereits vorgeschlagen, Disperse Blue 56 durch ausgewählte blaue Azofarbstoffe (vgl. O. Annen, R. Egli, R. Hasler, B. Henzi, H. Jakob und P. Matzinger REV. PROGR. COLORATION, 72 Vol. 17 (1987)) zu ersetzen.

Weiterhin sind bereits eine Reihe von blauen Azofarbstoffmischungen beschrieben worden. So sind beispielsweise aus EP-277 529 Mischungen aus Diphenylazofarbstoffen bekannt. In EP-392 359 und EP-311 910 sind Mischungen von Thiophenazofarbstoffen beschrieben und in EP-347 685 werden blaue Farbstoffmischungen aus Diphenylazo- und Thiophenazofarbstoffen offenbart. In EP-A-475 089 werden blaue Farbstoffmischungen aus Monoazofarbstoffen offenbart.

Aufgabe der vorliegenden Erfindung war es, die aus dem Stand der Technik bekannten blauen Farbstoffmischungen hinsichtlich ihrer anwendungstechnischen Eigenschaften dahingehend zu verbessern, daß sie noch geeignetere Disperse Blue 56 Ersatzprodukte darstellen.

Es wurden nun Mischungen von Dispersionsazofarbstoffen gefunden, die in praktisch allen wichtigen Eigenschaften ein deutlich verbessertes Ersatzprodukt für Disperse Blue 56 ergeben und die dadurch gekennzeichnet sind, daß sie
a) mindestens einen Farbstoff der Formel (I) 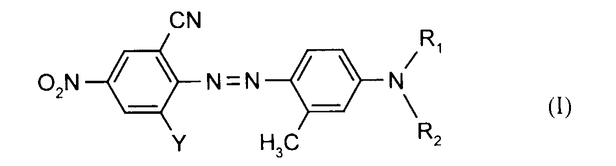 und
b) mindestens einen Farbstoff der Formel (II) 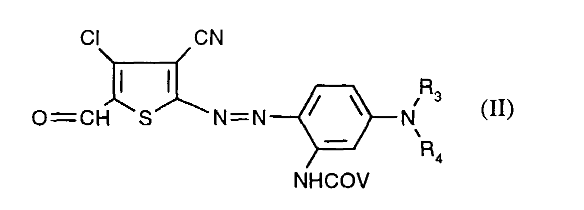 enthalten,
   worin
   - Y: NO₂ oder CN,
   - V: H, Alkyl, Alkoxyalkyl, Aryloxyalkyl, Aryl oder Alkoxy,
   - R₁: Alkyl, Aralkyl, Alkoxyalkyl oder Alkenyl,
   - R₂: Alkyl, Aralkyl, Alkoxyalkyl, Alkenyl, Chloralkyl, Aryloxyalkyl oder Alkoxycarbonylalkyl,
   - R₃: Alkyl, Aralkyl, Alkoxyalkyl, Hydroxyalkyl, Aryloxyalkyl, Alkenyl, Acyloxyalkyl oder Alkoxycarbonylalkyl und
   - R₄: Alkyl, Aralkyl, Alkoxyalkyl, Hydroxyalkyl, Aryloxyalkyl, Alkenyl, Acyloxyalkyl, Alkoxycarbonylalkyl oder C₂-C₄-Chloralkyl,
bedeuten.

Bevorzugt sind daher Mischungen von Farbstoffen der Formeln (I) und (II), die dadurch gekennzeichnet sind, daß die in deren Substituentenbedeutungen im beliebigen Zusammenhang genannten Acyl-, Alkyl- und Alkoxyreste solche mit 1 bis 4 C-Atomen, die unsubstituiert oder substituiert sind, vorzugsweise durch Substituenten wie Cyano oder C₁-C₄-Alkoxy, insbesondere jedoch unsubstituiert sind, Alkenylreste solche mit 2 bis 5 C-Atomen und die im beliebigen Zusammenhang genannten Arylreste solche mit 6 bis 10 C-Atomen, insbesondere Phenylreste, die unsubstituiert oder durch Cl und/oder C₁-C₄-Alkyl substituiert sind.

Weiterhin bevorzugt sind Mischungen aus Farbstoffen der Formeln (I) und (II),
worin
- Y: NO₂ oder CN,
- V: C₁-C₅-Alkyl, C₁-C₅-Alkoxy-C₁-C₅-alkyl, C₆-C₁₀-Aryl oder C₁-C₅-Alkoxy,
- R₁: C₁-C₅-Alkyl, C₁-C₅-Alkoxy-C₂-C₅-alkyl oder C₂-C₅-Alkenyl,
- R₂: C₁-C₅-Alkyl, C₁-C₅-Alkoxy-C₂-C₅-alkyl, C₂-C₅-Alkenyl, C₆-C₁₀-Aryl-C₁-C₅-alkyl oder C₆-C₁₀-Aryloxy-C₁-C₅-alkyl und
- R₃ und R₄: unabhängig voneinander C₁-C₅-Alkyl, C₆-C₁₀-Aryl-C₁-C₅-alkyl, C₁-C₅-Alkoxy-C₂-C₅-alkyl oder C₂-C₅-Alkenyl,
bedeuten.

Besonders bevorzugt sind Mischungen aus Farbstoffen der Formeln (I) und (II),
worin
- Y: NO₂ oder CN,
- V: Methyl, Ethyl, n-Propyl, iso-Propyl, n-Butyl, Methoxymethyl, Methoxyethyl oder Ethoxyethyl,
- R₁: Methyl, Ethyl, n-Propyl, iso-Propyl oder n-Butyl,
- R₂: Methyl, Ethyl, n-Propyl, iso-Propyl, n-Butyl, Methoxyethyl, Ethoxyethyl oder 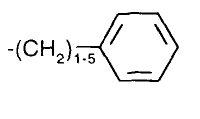
- R₃ und R₄: unabhängig voneinander Methyl, Ethyl, n-Propyl, iso-Propyl, n-Butyl, Methoxyethyl, Ethoxyethyl,
bedeuten.

Besonders geeignet sind die Mischungen aus Farbstoffen der Formeln (I) und (II),
worin
- Y: CN,
- V: Methyl oder Methoxymethyl,
- R₁: Methyl, Ethyl, n-Propyl oder n-Butyl,
- R₂: Ethyl, n-Propyl, n-Butyl oder 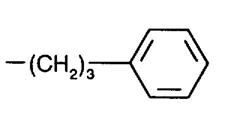 und
- R₃ und R₄: unabhängig voneinander Ethyl oder n-Propyl,
bedeuten.

Die Farbstoffe der Formeln (I) und (II) sind bekannt bzw. nach an sich bekannten Methoden leicht zugänglich und z.B. in folgender Patentliteratur beschrieben: DE-A-1 290 915 = US-A-4 105 655; EP-311 910, EP-392 358 und EP-392 359.

Gegenüber den letztgenannten drei europäischen Anmeldungen muß es als ausgesprochen überraschend bezeichnet werden, daß man mittels der erfindungsgemäßen Mischung zu klaren blauen Farbtönen entsprechend der Nuance von Disperse Blue 56 gelangen kann, da aus diesen Quellen explizit lediglich solche Farbstoffmischungen beschrieben sind, die verschiedene Thiophenazofarbstoffe beinhalten, die aber nur marineblaue bis schwarze Farbtöne liefern.

Beispielhaft sind in den nachfolgenden Tabellen Farbstoffindividuen der Formeln (I) und (II) genannt:

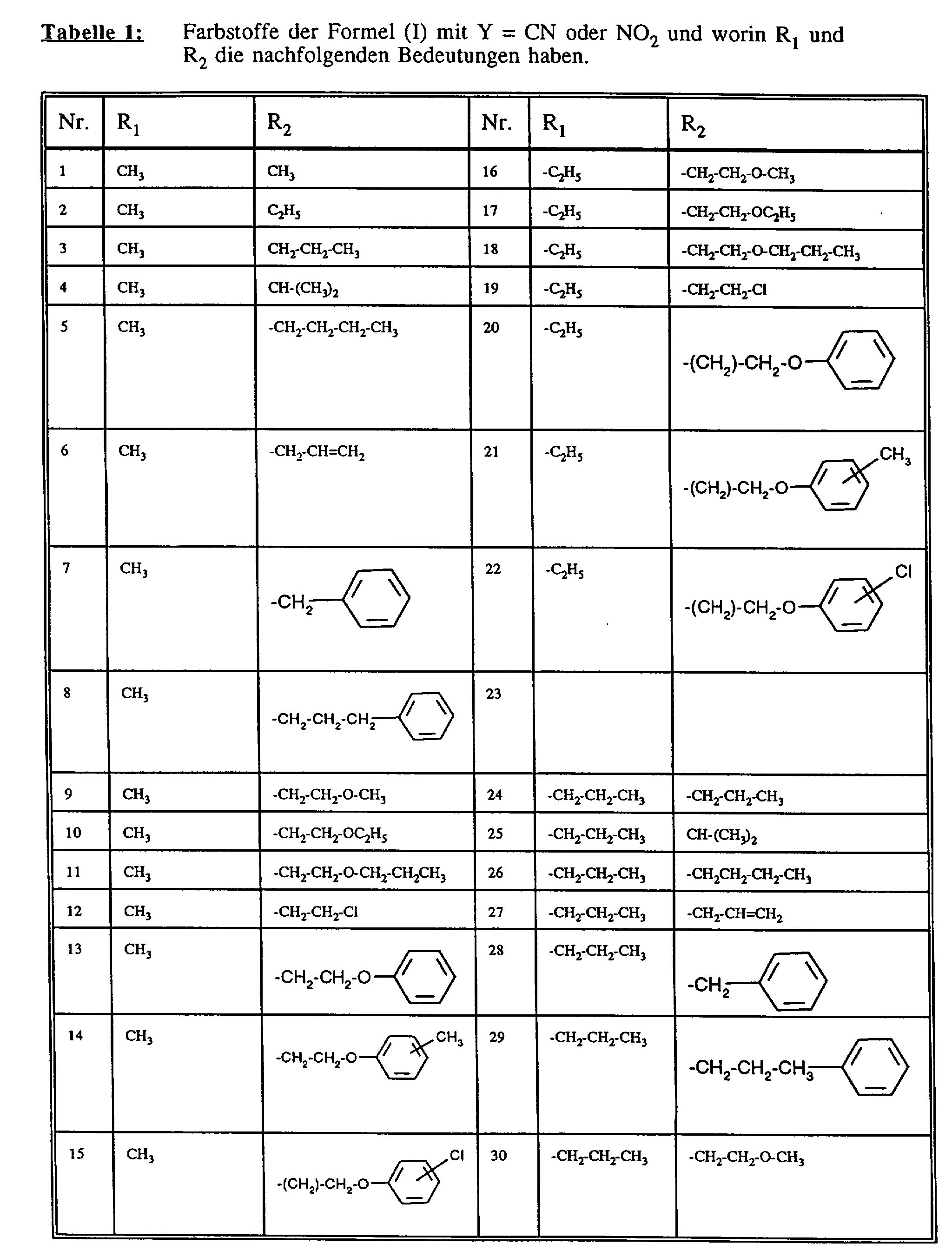

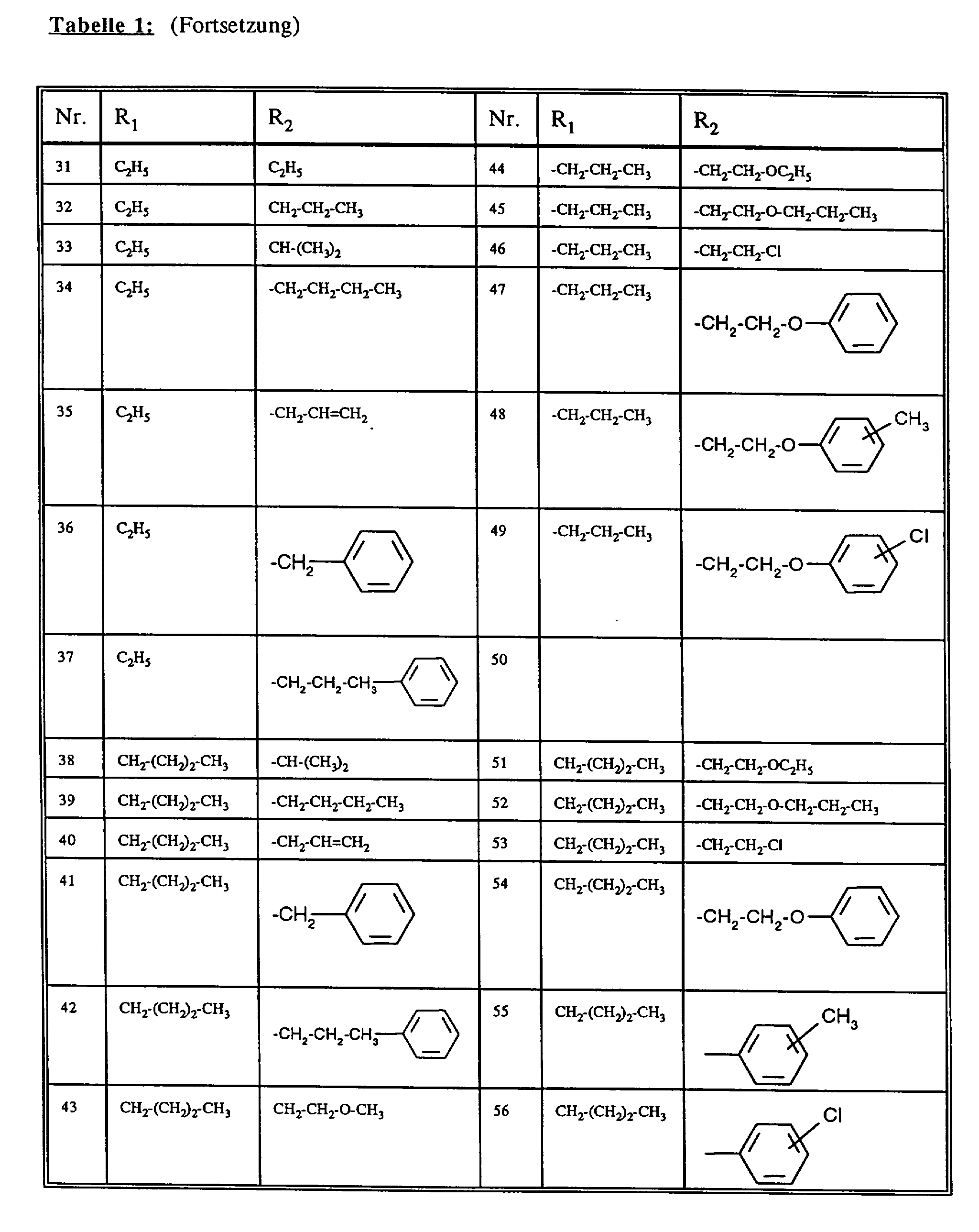

**Tabelle 2:**

| Farbstoffe der Formel (II) | | | |
|---|---|---|---|
| Nr. | V | R₃ | R₄ |
| 1 | CH₃ | CH₃ | CH₃ |
| 2 | CH₃ | C₂H₅ | C₂H₅ |
| 3 | CH₃ | CH₂-CH₂-CH₃ | CH₂-CH₂-CH₃ |
| 4 | CH₃ | C₂H₅ | CH₂-CH₂-O-CH₃ |
| 5 | CH₃ | C₂H₅ | CH₂-CH₂-O-C₂H₅ |
| 6 | CH₃ | -(CH₂)₂-CH₃ | CH₂-CH₂-O-CH₃ |
| 7 | CH₃ | -(CH₂)₂-CH₃ | CH₂-CH₂-O-C₂H₅ |
| 8 | CH₃ | CH₂-CH₂-OCH₃ | CH₂-CH₂-OCH₃ |
| 9 | CH₃ | CH₂-CH₂-O-C₂H₅ | CH₂-CH₂-O-C₂H₅ |
| | | | |
| 10 | CH₂-CH₂-CH₃ | CH₃ | CH₃ |
| 11 | CH₂-CH₂-CH₃ | C₂H₅ | C₂H₅ |
| 12 | CH₂-CH₂-CH₃ | CH₂-CH₂-CH₃ | CH₂-CH₂-CH₃ |
| 13 | CH₂-CH₂-CH₃ | C₂H₅ | CH₂-CH₂-O-CH₃ |
| 14 | CH₂-CH₂-CH₃ | C₂H₅ | CH₂-CH₂-O-C₂H₅ |
| 15 | CH₂-CH₂-CH₃ | -(CH₂)₂-CH₃ | CH₂-CH₂-O-CH₃ |
| 16 | CH₂-CH₂-CH₃ | -(CH₂)₂-CH₃ | CH₂-CH₂-O-C₂H₅ |
| 17 | CH₂-CH₂-CH₃ | CH₂-CH₂-OCH₃ | CH₂-CH₂-OCH₃ |
| 18 | CH₂-CH₂-CH₃ | CH₂-CH₂-O-C₂H₅ | CH₂-CH₂-O-C₂H₅ |

| | | | |
|---|---|---|---|
| 19 | CH₂-CH₂-CH₂-CH₃ | CH₃ | CH₃ |
| 20 | CH₂-CH₂-CH₂-CH₃ | C₂H₅ | C₂H₅ |
| 21 | CH₂-CH₂-CH₂-CH₃ | CH₂-CH₂-CH₃ | CH₂-CH₂-CH₃ |
| 22 | CH₂-CH₂-CH₂-CH₃ | C₂H₅ | CH₂-CH₂-O-CH₃ |
| 23 | CH₂-CH₂-CH₂-CH₃ | C₂H₅ | CH₂-CH₂-O-C₂H₅ |
| 24 | CH₂-CH₂-CH₂-CH₃ | -(CH₂)₂-CH₃ | CH₂-CH₂-O-CH₃ |
| 25 | CH₂-CH₂-CH₂-CH₃ | -(CH₂)₂-CH₃ | CH₂-CH₂-O-C₂H₅ |
| 26 | CH₂-CH₂-CH₂-CH₃ | CH₂-CH₂-OCH₃ | CH₂-CH₂-OCH₃ |
| 27 | CH₂-CH₂-CH₂-CH₃ | CH₂-CH₂-O-C₂H₅ | CH₂-CH₂-O-C₂H₅ |
| | | | |
| 28 | CH₃ | C₂H₄OC₆H₅ | C₂H₄OC₆H₅ |
| 29 | CH₃ | CH₂-CH=CH₂ | CH₂-CH=CH₂ |
| 30 | CH₃ | CH₂CH₂O-COCH₃ | CH₂CH₂O-COCH₃ |
| 31 | CH₃ | CH₂CH₂CH₂CH₃ | CH₂CH₂CH₂CH₃ |
| 32 | CH₃ | CH₂CH₂CH₂CO₂CH₃ | CH₂CH₂CH₂CO₂CH₃ |
| | | | |
| 33 | C₂H₅ | C₂H₅ | C₂H₅ |
| 34 | C₂H₅ | CH₂CH₂CH₃ | CH₂CH₂CH₃ |
| 35 | C₂H₅ | CH₂-CH=CH₂ | CH₂-CH=CH₂ |
| 36 | C₂H₅ | CH₂CH₂CH₂CO₂CH₃ | CH₂CH₂CH₂CO₂CH₃ |
| | C₂H₅ | C₂H₄OCH₃ | C₂H₄OCH₃ |

| | | | |
|---|---|---|---|
| 37 | CH₂OCH₃ | C₂H₅ | C₂H₅ |
| 38 | CH₂OCH₃ | CH₂CH₂CH₃ | CH₂CH₂CH₃ |
| 39 | CH₂OCH₃ | CH₂CH₂OCH₃ | CH₂CH₂OCH₃ |

Der Gewichtsanteil der einzelnen Farbstoffe in den erfindungsgemäßen Mischungen beträgt im allgemeinen:
5 bis 95 % Farbstoff der Formel I (bezogen auf die Mischung) und
95 bis 5 % Farbstoff der Formel II (bezogen auf die Mischung).
In einem bevorzugten Mischungstyp betragen die Anteile:
10 bis 90 % Farbstoff der Formel I (bezogen auf die Mischung) und
90 bis 10 % Farbstoff der Formel II (bezogen auf die Mischung).

Bevorzugte Mischungen werden erhalten durch Verwendung der nachfolgenden Diphenylazofarbstoffe und Thiophenazofarbstoffe A - D:

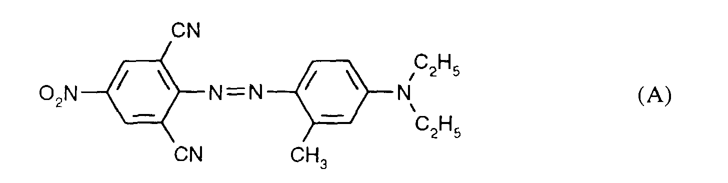

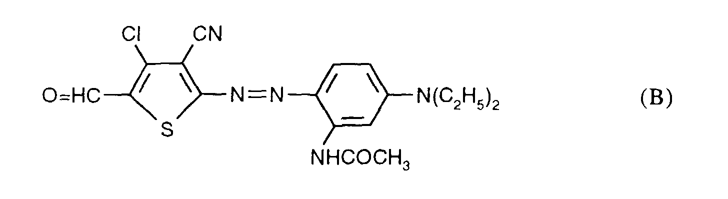

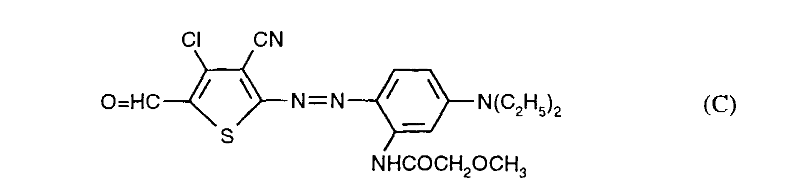

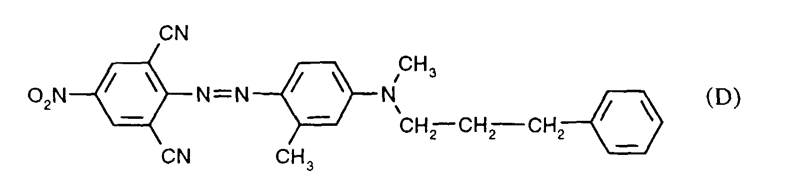

Dabei sind folgende Mischungsverhältnisse bevorzugt:
a) 10 bis 90 % Farbstoff A
   90 bis 10 % Farbstoff B
b) 20 bis 80 % Farbstoff A
   80 bis 20 % Farbstoff B
c) 25 bis 45 % Farbstoff A
   75 bis 55 % Farbstoff B
d) 10 bis 90 % Farbstoff A
   90 bis 10 % Farbstoff C
e) 20 bis 80 % Farbstoff A
   80 bis 20 % Farbstoff C
f) 40 bis 60 % Farbstoff A
   60 bis 40 % Farbstoff C
g) 5 bis 95 % Farbstoff D
   95 bis 5 % Farbstoff B
h) 5 bis 30 % Farbstoff D
   95 bis 70 % Farbstoff B
i) 5 bis 20 % Farbstoff D
   95 bis 80 % Farbstoff B
j) 10 bis 90 % Farbstoff D
   90 bis 10 % Farbstoff C
k) 10 bis 50 % Farbstoff D
   90 bis 50 % Farbstoff C
l) 20 bis 40 % Farbstoff D
   80 bis 60 % Farbstoff C

Die "Cyanierung" von ortho-Halogenazofarbstoffen sowie die dabei erhaltenen Dicyanfarbstoffe - als solche - sind allgemein bekannt (vgl. DE-A-1 544 563 = US-A-3 962 209 sowie DE-A-3 009 635).

Die erfindungsgemäßen Farbstoffmischungen können nach verschiedenen Verfahren hergestellt werden, z.B. durch Mischen der getrennt hergestellten und getrennt formulierten Einzelfarbstoffe. Dieser Mischprozeß erfolgt in geeigneten Mischern wie z.B. Taumelmischern, in geeigneten Mühlen, beispielsweise Kugel- und Sandmühlen. Getrennt formierte Einzelfarbstoffe können aber auch durch Einrühren in Färbeflotten gemischt werden.

Vorzugsweise werden die erfindungsgemäßen Mischungen durch gemeinsame Formierung der getrennt hergestellten Einzelkomponenten erhalten.

Diese gemeinsame Formierung ist dadurch gekennzeichnet, daß eine Farbstoffmischung aus jeweils mindestens einem Feststoff der allgemeinen Formeln (I) und (II) in Gegenwart von Dispergiermitteln in geeigneten Mühlen, wie z.B. Kugel- oder Sandmühlen, gemahlen und, wenn eine pulverförmige Farbstoff-Formierung hergestellt werden soll, anschließend sprühgetrocknet wird.

Die Erfindung betrifft weiterhin Farbstoffpräparationen, enthaltend die erfindungsgemäßen Farbstoffmischungen.

Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkyl-aryl-sulfonate, sowie Alkyl-aryl-polyglykolethersulfate. Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an C₈-C₁₀-Alkylphenole.

Die Mahlung erfolgt im allgemeinen bei Temperaturen zwischen 10 und 90°C, vorzugsweise bei 30 bis 60°C. Bei der gemeinsamen Formierung getrennt hergestellter Einzelkomponenten ist die gemeinsame Mahlung bei Temperaturen über 30°C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengröße der Farbstoffe liegt im allgemeinen zwischen 0,5 und 5 µm, vorzugsweise bei etwa 1 µm.

Es kann vorteilhaft sein, die getrennt hergestellten Einzelkomponenten der Farbstoffmischung vor der gemeinsamen Mahlung einer gemeinsamen thermischen Behandlung zu unterwerfen. Diese thermische Behandlung ist dadurch gekennzeichnet, daß man die Einzelkomponenten der Farbstoffmischung gegebenenfalls unter Druck in Wasser eine halbe bis mehrere Stunden auf Temperaturen von 50 bis 150°C, vorzugsweise 90 bis 130°C, erhitzt und wieder abkühlt. Dieses Erhitzen erfolgt vorteilhaft in Gegenwart eines oder mehrerer Dispergiermittel oder eines organischen Lösungsmittels. Solche Lösungsmittel sind z.B. Methanol, Ethanol, Dimethylformamid oder Dimethylsulfoxid, vorzugsweise jedoch in Wasser wenig lösliche Lösungsmittel wie Toluol, Chlorbenzol, 1,2-Dichlorbenzol oder Butylacetat. Diese Lösungsmittel werden nach der thermischen Behandlung wieder abdestilliert.

Eine bevorzugte Vorbehandlung der Einzelkomponenten der Farbstoffmischung vor der gemeinsamen Mahlung ist das gemeinsame Lösen der Einzelkomponenten in einem organischen Lösungsmittel oder Lösungsmittelgemisch mit anschließen-Auskristallisieren oder Ausfällen, Isolieren, z.B. durch Filtration und Abtrennen von Lösungsmittelresten, z.B. durch Waschen.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten die Farbstoffmischung, Dispergiermittel und gegebenenfalls andere Hilfsmittel, wie z.B. Netz-, Oxidations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Die erfindungsgemäßen Farbstoffpräparationen enthalten im allgemeinen 20 bis 80 Gew.-% der Farbstoffmischung und 80 bis 20 Gew.-% Dispergiermittel, jeweils bezogen auf die Präparation.

Die Farbstoffgehalte der flüssigen Farbstoffeinstellungen liegen im allgemeinen bei 20 bis 40 Gew.-% und der Dispergiermittelgehalt im allgemeinen bei ca. 20 bis 40 Gew.-%, jeweils bezogen auf die flüssige Präparation. Bei Pulvereinstellungen liegen die Farbstoffgehalte im allgemeinen bei 20 bis 60 Gew.-% und der Dispergiermittelgehalt im allgemeinen bei 40 bis 80 Gew.-%, jeweils bezogen auf die feste Präparation. Aus ökonomischen Gründen wird ein Farbstoffgehalt von 20 Gew.-% meist nicht unterschritten.

Die erfindungsgemäßen Farbstoffmischungen sind als solche oder auch im Gemisch mit anderen Dispersionsfarbstoffen vorzüglich zum Färben und Bedrucken von hydrophoben synthetischen Fasermaterialien und deren Mischungen mit natürlichen Faserstoffen geeignet.

Als hydrophobe, synthetische Materialien kommen z.B. in Betracht: Cellulose-2½-Acetat, Cellulosetriacetat, Polyamide und besonders Polyester, wie z.B. Polyethylenglykolterephthalat. Deren Mischungen mit natürlichen Faserstoffen sind z.B. Baumwolle, regenerierte Cellulosefasern oder Wolle.

Die Erfindung wird durch die folgenden Beispiele näher erläutert:

In den nachfolgenden Beispielen bedeuten "Teile" und "%" = Gewichtsteile bzw. Gewichtsprozente.

### Beispiel 1

Durch Perlmahlung und anschließende Sprühtrocknung wird ein Färbepräparat aus

| | |
|---|---|
| 13 Teilen | des Farbstoffs A, |
| 26 Teilen | des Farbstoffs B, |
| 61 Teilen | Stellmittel auf Basis handelsüblicher Ligninsulfonate, handelsüblicher Dispergiermittel (Kondensationsprodukt aus Formaldehyd, Naphthalin und Schwefelsäure), handelsüblicher Netzmittel (alkoxylierte Alkylphenole), handelsüblicher Entstaubungsmittel (Mineralöl mit Emulgatoren) und |
| 6,0 Teilen | Restfeuchte |

hergestellt.

In einem Färbebad, das mit Natriumphosphat und Essigsäure auf einen pH-Wert von 4,5 gestellt ist, werden 100 Teile eines Polyestergewebes (Polyethylenterephthalat) 30 bis 45 Minuten bei 125 bis 135°C mit 0,75 g des oben beschriebenen Färbepräparates (Flottenverhältnis 1:10 bis 1:40) gefärbt.

Man erhält klare, rotstichig blaue Färbungen mit guten Echtheiten.

### Beispiel 2

In einem Färbebad, das 5 g/l eines handelsüblichen Carriers (z.B. auf Basis aromatischer Carbonester) enthält, mit Natriumphosphat und Essigsäure auf einen pH-Wert von 4,5 gestellt ist, werden 100 Teile eines Polyestergewebes mit 0,75 Teilen der oben beschriebenen Farbstoffpräparation 30 Minuten bei 90 bis 105°C gefärbt. Man erhält volle, tiefe blaue Färbungen mit guten Echtheiten.

### Beispiel 3

In einem Färbebad, das mit Natriumphosphat und Essigsäure auf einen pH-Wert von 4,5 gestellt ist, werden 200 Teile eines Polyester-(Polyethylenterephthalat)-Baumwollmischgewebes 50/50 30 bis 45 Minuten bei 125 bis 135°C mit 0,75 Teilen des oben beschriebenen Färbepräparates (Flottenverhältnis 1:10 bis 1:40) gefärbt. Man erhält klare blaue Färbungen mit guten Echtheiten.

### Beispiel 4

In einem Färbebad, das 5 g/l eines handelsüblichen Carriers (z.B. auf Basis aromatischer Carbonester) enthält, mit Natriumphosphat und Essigester auf einen pH-Wert von 4,5 gestellt ist, werden 200 Teile eines Polyester-Wolle-Mischgewebes 50/50 mit 0,75 Teilen der oben beschriebenen Farbstoffpräparation 30 Minuten bei 90 bis 105°C gefärbt. Man erhält volle, tiefe blaue Färbungen mit guten Echtheiten.

Zu ähnlichen Ergebnissen kommt man bei Verwendung nachstehender Mischungen, die analog zu Beispiel 1 hergestellt wurden.

### Beispiel 5

50 % Farbstoff A
50 % Farbstoff C

### Beispiel 6

45 % Farbstoff A
55 % Farbstoff C

### Beispiel 7

55 % Farbstoff A
45 % Farbstoff C

### Beispiel 8

13 % Farbstoff D
87 % Farbstoff B

### Beispiel 9

8 % Farbstoff D
92 % Farbstoff B

### Beispiel 10

20 % Farbstoff D
80 % Farbstoff B

### Beispiel 11

26,5 % Farbstoff D
73,5 % Farbstoff C

### Beispiel 12

20 % Farbstoff D
80 % Farbstoff C

### Beispiel 13

30 % Farbstoff D
70 % Farbstoff C

### Beispiel 14 (Vergleichsbeispiel)

Der aus EP-A 347 685 (Beispiel 11) bekannten Farbstoffmischung (Mischung I), enthaltend den Farbstoff der Formel (A) und den Thiophenazofarbstoff der Formel (E) 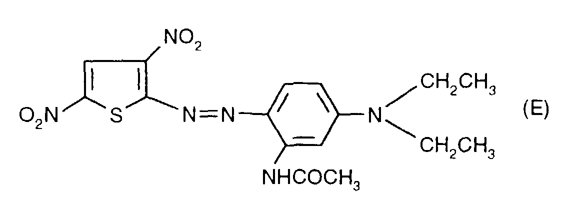 wurden 2 erfindungsgemäße Mischungen (II und III) gegenübergestellt.

Zu diesem Zweck wurden die Anteile der Einzelfarbstoffe so gewählt, daß der Farbton der jeweiligen Mischung dem von Disperse Blue 56 entspricht. Dies wurde durch die Mischungen I, II und III realisiert, deren Farbstoffverhältnisse der Tabelle entnommen werden können.

| Mischung aus Farbstoff | Mischung I* (Stand der Technik) | Mischung II** (erfindungsgemäß) | Mischung III** (erfindungsgemäß) |
|---|---|---|---|
| A | 61 | 32,7 | 50 |
| B | - | 67,3 | - |
| C | - | - | 50 |
| E | 39 | - | - |

| | | | |
|---|---|---|---|
| * Verhältnis der gestellten Einzelfarbstoffe | | | |
| ** Verhältnis der Rohfarbstoffe | | | |

A) Die Lichtechtheit von den jeweiligen erfindungsgemäßen Farbstoffmischungen II und III ist gegenüber der von Mischung I aus dem Stand der Technik deutlich besser.

| Lichtechtheit | |
|---|---|
| Mischung I | 6 |
| Mischung II | 6 - 7 |
| Mischung III | 6 - 7 |

B) Auch in der Kombination mit anderen Farbstoffen konnten deutliche Vorteile in der Lichtechtheit der erfindungsgemäßen Farbstoffmischungen gefunden werden (Kombinationslichtechtheit). Dazu wurden die Mischungen I - III jeweils mit dem Farbstoff der Formel (F) 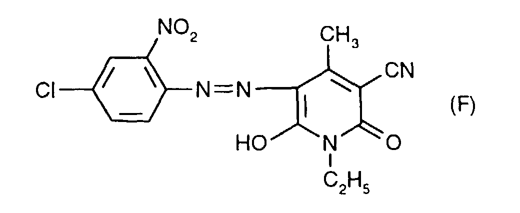 auf den gleichen Farbton (Grün) eingestellt. Die Polyesterfärbungen mit den jeweiligen Mischungen wurden dann dem Lichtechtheitstest unterworfen.

| Lichtechtheit | |
|---|---|
| Mischung I+F | 6 |
| Mischung II+F | 6 - 7 |
| Mischung III+F | 6 - 7 |

C) Gegenüber Disperse Blue 56 sind die erfindungsgemäßen Mischungen deutlich farbstärker. Dies kann den zur Einstellung gleicher Farbstärken benötigten Farbstoffanteile entnommen werden.

| Farbstoffanteil (bezogen auf zu färbendes Polyestergewebe) | |
|---|---|
| Disperse Blue 56 | 0,585 % |
| Mischung II | 0,297 % |
| Mischung III | 0,300 % |

### Beispiel 15 (Vergleichsbeispiel)

Der aus EP-A 347 685 beschriebenen (Vergl. Tabelle 1, Seite 9) Farbstoffmischung (Mischung IV), enthaltend den Farbstoff der Formel (D) und den Thiophenazofarbstoff der Formel (E), wurden 2 erfindungsgemäße Mischungen V und VI gegenübergestellt.

Zu diesem Zweck wurden die Anteile der Einzelfarbstoffe so gewählt, daß der Farbton der jeweiligen Mischung dem von Disperse Blue 56 entspricht. Dies wurde durch die Mischungen IV, V und VI realisiert, deren Farbstoffverhältnisse der Tabelle entnommen werden können.

| Mischung aus Farbstoff | Mischung IV* (Stand der Technik) | Mischung V** (erfindungsgemäß) | Mischung VI** (erfindungsgemäß) |
|---|---|---|---|
| B | - | 86,9 | - |
| C | - | - | 73,8 |
| D | 56,5 | 13,1 | 26,2 |
| E | 43,5 | - | - |

| | | | |
|---|---|---|---|
| * Verhältnis der gestellten Einzelfarbstoffe | | | |
| ** Verhältnis der Rohfarbstoffe | | | |

A) Die Lichtechtheit von den jeweiligen erfindungsgemäßen Mischungen V und VI ist gegenüber der von Mischung IV aus dem Stand der Technik deutlich besser.

| Lichtechtheit | |
|---|---|
| Mischung IV | 6 |
| Mischung V | 6 - 7 |
| Mischung VI | 6 - 7 |

B) Auch in der Kombination mit anderen Farbstoffen konnten deutliche Vorteile in der Lichtechtheit gefunden werden (Kombinationslichtechtheit). Dazu wurden die Mischungen IV - VI jeweils mit dem Farbstoff der Formel (F) auf gleiche Farbstärke eingestellt und die damit erhaltenen Polyesterfärbungen dem Lichtechtheitstest unterworfen.

| Lichtechtheit | |
|---|---|
| Mischung IV+F | 6 |
| Mischung V+F | 6 - 7 |
| Mischung VI+F | 6 - 7 |

C) Gegenüber Disperse Blue 56 sind die erfindungsgemäßen Mischungen deutlich farbstärker. Dies kann den zur Einstellung gleicher Farbstärken benötigten Farbstoffanteile entnommen werden.

| Farbstoffanteil (bezogen auf zu färbendes Polyestergewebe) | |
|---|---|
| Disperse Blue 56 | 0,585 % |
| Mischung V | 0,260 % |
| Mischung VI | 0,244 % |

## Patentansprüche

1. Mischung von Dispersionsazofarbstoffen, dadurch gekennzeichnet, daß sie
a) mindestens einen Farbstoff der Formel (I) 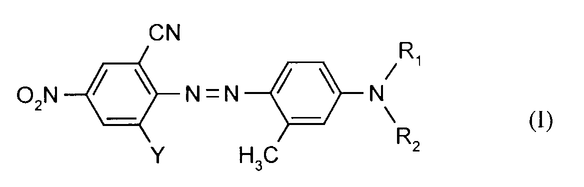 und
b) mindestens einen Farbstoff der Formel (II) 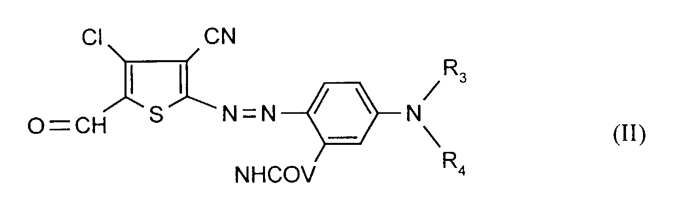 enthält,
worin
Y NO₂ oder CN,
V H, Alkyl, Alkoxyalkyl, Aryloxyalkyl, Aryl oder Alkoxy,
R₁ Alkyl, Aralkyl, Alkoxyalkyl oder Alkenyl,
R₂ Alkyl, Aralkyl, Alkoxyalkyl, Alkenyl, Chloralkyl, Aryloxyalkyl oder Alkoxycarbonylalkyl,
R₃ Alkyl, Aralkyl, Alkoxyalkyl, Hydroxyalkyl, Aryloxyalkyl, Alkenyl, Acyloxyalkyl oder Alkoxycarbonylalkyl,
R₄ Alkyl, Aralkyl, Alkoxyalkyl, Hydroxyalkyl, Aryloxyalkyl, Alkenyl, Acyloxyalkyl, Alkoxycarbonylalkyl oder C₁-C₄-Chloralkyl,
bedeuten, wobei die genannten Acyl-, Alkyl-, und Alkoxyreste auch solche mit 1 bis 4 C-Atomen sind, die durch Cyano oder C₁-C₄-alkoxy substituiert sind und die genannten Arylreste auch solche mit 6 bis 10 C-Atomen sind, die durch Cl und/oder C₁-C₄-Alkyl substituiert sind.

2. Mischung von Farbstoffen der Formeln (I) und (II) gemäß Anspruch 1, dadurch gekennzeichnet, daß die genannten Acyl-, Alkyl- und Alkoxyreste solche mit 1 bis 4 C-Atomen, die unsubstituiert oder durch Cyano oder C₁-C₄-Alkoxy substituiert sind, daß die Alkylenreste solche mit 2 bis 5 C-Atomen und die genannten Arylreste solche mit 6 bis 10 C-Atomen sind, die unsubstituiert oder durch Cl und/oder C₁-C₄-Alkyl substituiert sind.

3. Mischung gemäß Anspruch 1, dadurch gekennzeichnet, daß in den Formeln I und II
V C₁-C₅-Alkyl, C₁-C₅-Alkoxy-C₁-C₅-alkyl, C₆-C₁₀-Aryl oder C₁-C₅-Alkoxy,
R₁ C₁-C₅-Alkyl, C₁-C₅-Alkoxy-C₂C₅-alkyl oder C₂-C₅-Alkenyl,
R₂ C₁-C₅-Alkyl, C₁-C₅-Alkoxy-C₂-C₅-alkyl, C₂-C₅-Alkenyl, C₆-C₁₀-Aryl-C₁-C₅-alkyl oder C₆-C₁₀-Aryloxy-C₁-C₅-alkyl,
R₃ und R₄ unabhängig voneinander C₁-C₅-Alkyl, C₆-C₁₀-Aryl-C₁-C₅-alkyl, C₁-C₅-Alkoxy-C₂-C₅-alkyl oder C₂-C₅-Alkenyl,
bedeuten.

4. Mischung gemäß Anspruch 1, dadurch gekennzeichnet, daß in den Formeln I und II
V Methyl, Ethyl, n-Propyl, iso-Propyl, n-Butyl, Methoxymethyl, Methoxyethyl oder Ethoxyethyl,
R₁ Methyl, Ethyl, n-Propyl, iso-Propyl oder n-Butyl,
R₂ Methyl, Ethyl, n-Propyl, iso-Propyl, n-Butyl, Methoxyethyl, Ethoxyethyl oder 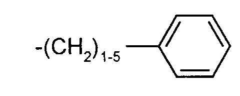 und
R₃ und R₄ unabhängig voneinander Methyl, Ethyl, n-Propyl, iso-Propyl, n-Butyl, Methoxyethyl oder Ethoxyethyl bedeuten.

5. Mischung gemäß Anspruch 1, dadurch gekennzeichnet, daß in den darin angegebenen Formeln
Y CN,
V Methyl oder Methoxymethyl,
R₁ Methyl, Ethyl, n-Propyl oder n-Butyl,
R₂ Ethyl, n-Propyl, n-Butyl oder 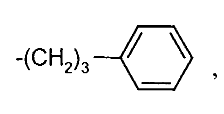 und
R₃ und R₄ unabhängig voneinander Ethyl oder n-Propyl bedeuten.

6. Mischung gemäß Anspruch 1, dadurch gekennzeichnet, daß der Gewichtsanteil des Farbstoffes der Formel I 5 bis 95 % und der des Farbstoffs der Formel II 95 bis 5 %, bezogen auf die Mischung beträgt.

7. Mischung gemäß Anspruch 1, dadurch gekennzeichnet, daß der Gewichtsanteil des Farbstoffs der Formel 1 10 bis 90 % und der des Farbstoffs der Formel II 90 bis 10 %, bezogen auf die Mischung beträgt.

8. Mischung gemäß Anspruch 1, dadurch gekennzeichnet, daß diese einen Farbstoff der Formel (A) 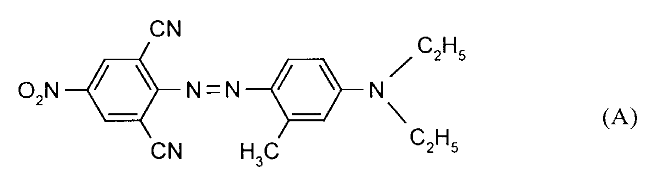 und mindestens einen Farbstoff der Formel (B) oder (C) 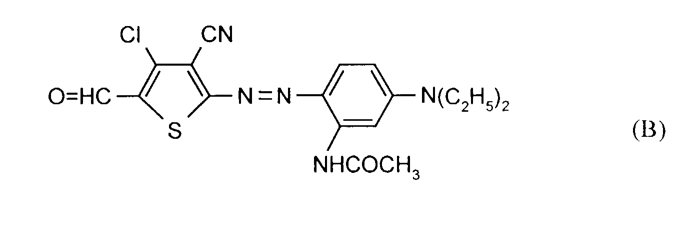 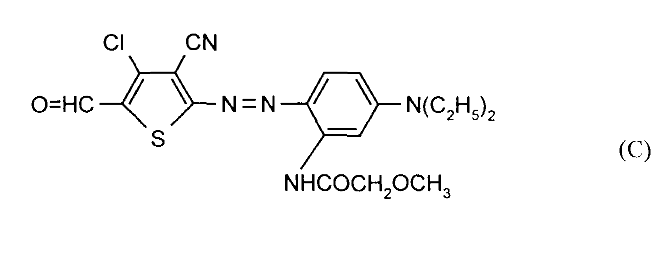 oder
einen Farbstoff der Formel (D) 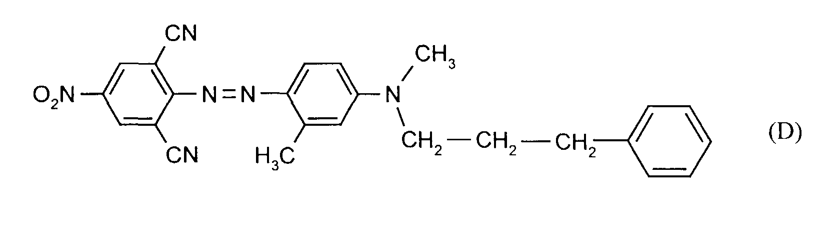 und mindestens einen Farbstoff der Formel (B) oder (C) 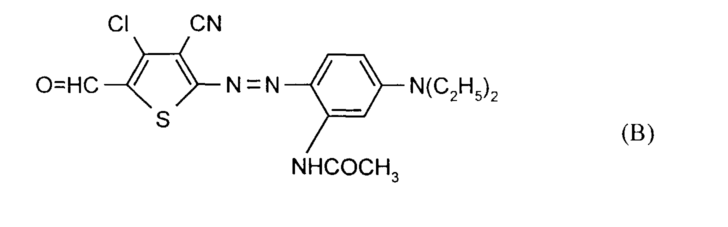 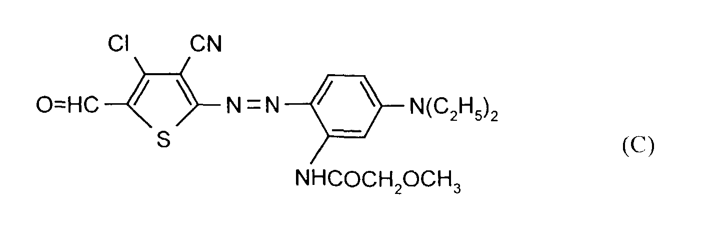 enthält.

9. Farbstoffpräparation, enthaltend
20 bis 80 Gew.-% Farbstoffmischungen nach Anspruch 1, bezogen auf die Präparation,
80 bis 20 Gew.-% Dispergiermittel, bezogen auf die Präparation und gegebenenfalls weitere Zusätze.

10. Verfahren zum Färben von hydrophoben synthetischen Fasern und deren Mischungen mit natürlichen Faserstoffen, dadurch gekennzeichnet, daß man Farbstoffmischungen gemäß Anspruch 1 verwendet.

## Claims

1. Mixture of disperse azo dyestuffs, characterized in that it comprises
a) at least one dyestuff of the formula (I) 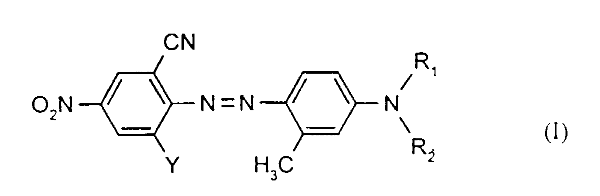 and
b) at least one dyestuff of the formula (II) 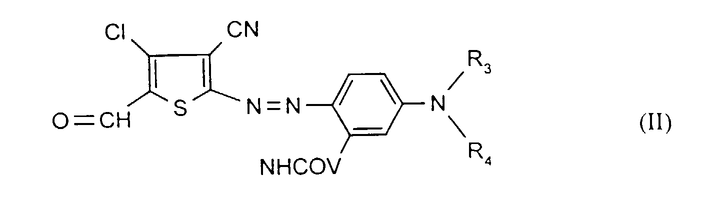 wherein
Y denotes NO₂ or CN,
V denotes H, alkyl, alkoxyalkyl, aryloxyalkyl, aryl or alkoxy,
R₁ denotes alkyl, aralkyl, alkoxyalkyl or alkenyl,
R₂ denotes alkyl, aralkyl, alkoxyalkyl, alkenyl, chloroalkyl, aryloxyalkyl or alkoxycarbonylalkyl,
R₃ denotes alkyl, aralkyl, alkoxyalkyl, hydroxyalkyl, aryloxyalkyl, alkenyl, acyloxyalkyl or alkoxycarbonylalkyl and
R₄ denotes alkyl, aralkyl, alkoxyalkyl, hydroxyalkyl, aryloxyalkyl, alkenyl, acyloxyalkyl, alkoxycarbonylalkyl or C₂-C₄-chloroalkyl,
the acyl, alkyl and alkoxy radicals mentioned also being those having 1 to 4 C atoms which are substituted by cyano or C₁-C₄-alkoxy, and the aryl radicals mentioned also being those having 6 to 10 C atoms which are substituted by Cl and/or C₁-C₄-alkyl.

2. Mixture of dyestuffs of the formulae (I) and (II) according to Claim 1, characterized in that the acyl, alkyl and alkoxy radicals mentioned are those having 1 to 4 C atoms which are unsubstituted or substituted by cyano or C₁-C₄-alkoxy, and in that the alkylene radicals are those having 2 to 5 C atoms and the aryl radicals mentioned are those having 6 to 10 C atoms which are unsubstituted or substituted by Cl and/or C₁-C₄-alkyl.

3. Mixture according to Claim 1, characterized in that, in the formulae I and II,
V denotes C₁-C₅-alkyl, C₁-C₅-alkoxy-C₁-C₅-alkyl, C₆-C₁₀-aryl or C₁-C₅-alkoxy,
R₁ denotes C₁-C₅-alkyl, C₁-C₅-alkoxy-C₂-C₅-alkyl or C₂-C₅-alkenyl,
R₂ denotes C₁-C₅-alkyl, C₁-C₅-alkoxy-C₂-C₅-alkyl, C₂-C₅-alkenyl, C₆-C₁₀-aryl-C₁-C₅-alkyl or C₆-C₁₀-aryloxy-C₁-C₅-alkyl and
R₃ and R₄ independently of one another denote C₁-C₅-alkyl, C₆-C₁₀-aryl-C₁-C₅-alkyl, C₁-C₅-alkoxy-C₂-C₅-alkyl or C₁-C₅-alkenyl.

4. Mixture according to Claim 1, characterized in that, in the formulae I and II,
V denotes methyl, ethyl, n-propyl, iso-propyl, n-butyl, methoxymethyl, methoxyethyl or ethoxyethyl,
R₁ denotes methyl, ethyl, n-propyl, iso-propyl or n-butyl,
R₂ denotes methyl, ethyl, n-propyl, iso-propyl, n-butyl, methoxyethyl, ethoxyethyl
or 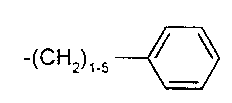 and
R₃ and R₄ independently of one another denote methyl, ethyl, n-propyl, iso-propyl, n-butyl, methoxyethyl or ethoxyethyl.

5. Mixture according to Claim 1, characterized in that, in the formulae shown,
Y denotes CN,
V denotes methyl or methoxymethyl,
R₁ denotes methyl, ethyl, n-propyl or n-butyl,
R₂ denotes ethyl, n-propyl, n-butyl or 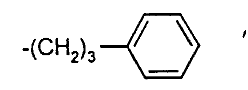 and
R₃ and R₄ independently of one another denote ethyl or n-propyl.

6. Mixture according to Claim 1, characterized in that the weight content of the dyestuff of the formula I is 5 to 95% and that of the dyestuff of the formula II is 95 to 5%, based on the mixture.

7. Mixture according to Claim 1, characterized in that the weight content of the dyestuff of the formula I is 10 to 90% and that of the dyestuff of the formula II is 90 to 10%, based on the mixture.

8. Mixture according to Claim 1, characterized in that this comprises a dyestuff of the formula (A) 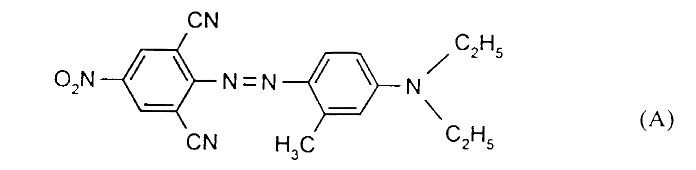 and at least one dyestuff of the formula (B) or (C) 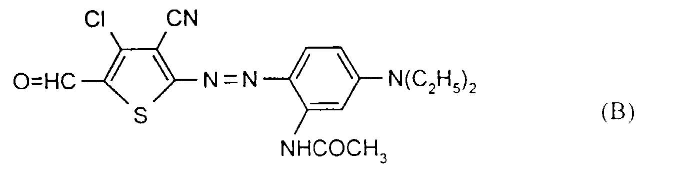 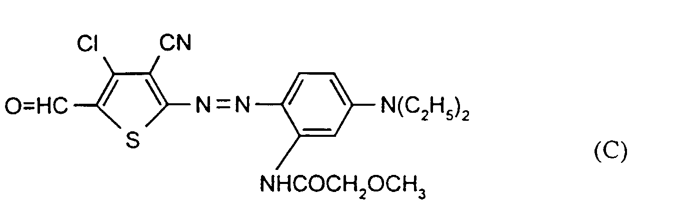 or
a dyestuff of the formula (D) 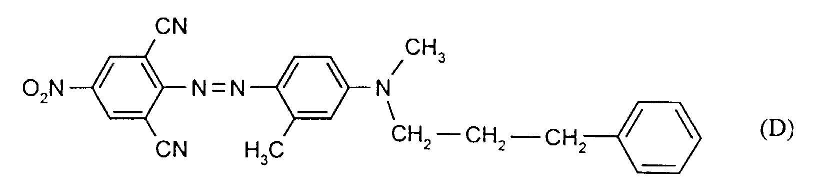 and at least one dyestuff of the formula (B) or (C)

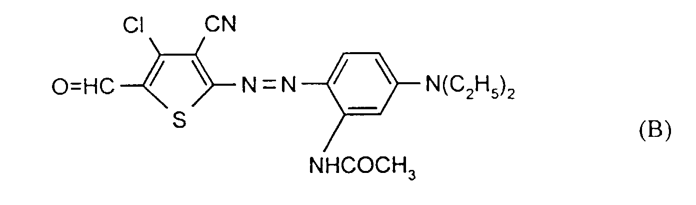

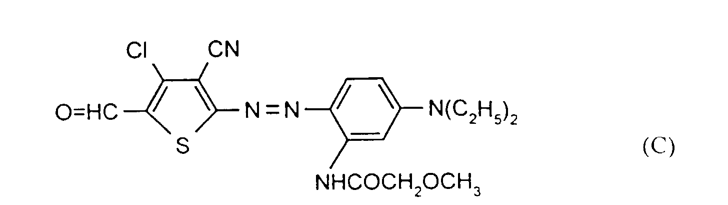

9. Dyestuff preparation comprising
20 to 80% by weight of dyestuff mixtures according to Claim 1, based on the preparation, and
80 to 20% by weight of dispersing agents, based on the preparation, and if appropriate further additives.

10. Process for dyeing hydrophobic synthetic fibres and mixtures thereof with naturally occurring fibrous materials, characterized in that dyestuff mixtures according to Claim 1 are used.

## Revendications

1. Mélange de colorants azoïques de dispersion caractérisé en ce qu'il contient
a) au moins un colorant de formule (I) 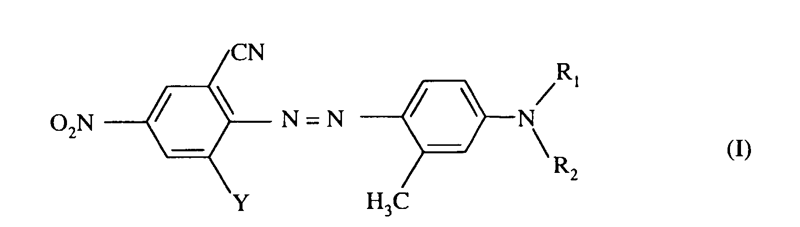 et
b) au moins un colorant de formule (II) 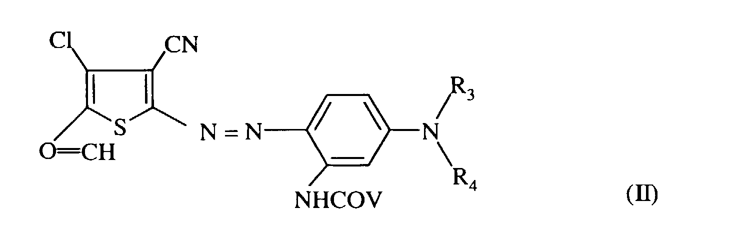 où
Y représente NO₂ ou CN,
V représente H, alkyle, alcoxyalkyle, aryloxyalkyle, aryle ou alcoxy,
R₁ représente alkyle, aralkyle, alcoxyalkyle ou alcényle,
R₂ représente alkyle, aralkyle, alcoxyalkyle, alcényle, chloroalkyle, aryloxyalkyle ou alcoxycarbonylalkyle,
R₃ représente alkyle, aralkyle, alcoxyalkyle, hydroxyalkyle, aryloxyalkyle, alcényle, acyloxyalkyle ou alcoxycarbonylalkyle, et
R₄ représente alkyle, aralkyle, alcoxyalkyle, hydroxyalkyle, aryloxyalkyle, alcényle, acyloxyalkyle, alcoxycarbonylalkyle ou chloroalkyle en C₂-C₄
où les restes acyle, alkyle et alcoxy cités sont aussi des restes ayant 1 à 4 atomes de carbone qui sont substitués par cyano ou alcoxy en C₁-C₄, et les restes aryle cités sont aussi des restes ayant 6 à 10 atomes de carbone qui sont substitués par Cl et/ou alkyle en C₁-C₄.

2. Mélange de colorants des formules (I) et (II) selon la revendication 1, caractérisé en ce que les restes acyle, alkyle et alcoxy cités sont des restes ayant 1 à 4 atomes de carbone qui sont non substitués ou substitués par cyano ou alcoxy en C₁-C₄, en ce que les restes alkylène sont des restes ayant 2 à 5 atomes de carbone et les restes aryle cités sont des restes ayant 6 à 10 atomes de carbone qui sont non substitués ou substitués par Cl et/ou alkyle en C₁-C₄.

3. Mélange selon la revendication 1, caractérisé en ce que, dans les formules I et II,
V représente alkyle en C₁-C₅, alcoxy en C₁-C₅-alkyle en C₁-C₅, aryle en C₆-C₁₀ ou alcoxy en C₁-C₅,
R₁ représente alkyle en C₁-C₅, alcoxy en C₁-C₅-alkyle en C₂-C₅ ou alcényle en C₂-C₅,
R₂ représente alkyle en C₁-C₅, alcoxy en C₁-C₅-alkyle en C₂-C₅, alcényle en C₂-C₅, aryle en C₆-C₁₀-alkyle en C₁-C₅ ou aryloxy en C₆-C₁₀-alkyle en C₁-C₅,
R₃ et R₄ représentent indépendamment l'un de l'autre alkyle en C₁-C₅, aryle en C₆-C₁₀-alkyle en C₁-C₅, alcoxy en C₁-C₅-alkyle en C₂-C₅ ou alcényle en C₂-C₅.

4. Mélange selon la revendication 1, caractérisé en ce que, dans les formules I et II,
V représente méthyle, éthyle, n-propyle, isopropyle, n-butyle, méthoxyméthyle, méthoxyéthyle ou éthoxyéthyle,
R₁ représente méthyle, éthyle, n-propyle, isopropyle ou n-butyle,
R₂ représente méthyle, éthyle, n-propyle, isopropyle, n-butyle, méthoxyéthyle, éthoxyéthyle ou 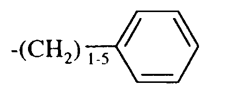 et
R₃ et R₄ représentent indépendamment l'un de l'autre méthyle, éthyle, n-propyle, isopropyle, n-butyle, méthoxyéthyle ou éthoxyéthyle.

5. Mélange selon la revendication 1, caractérisé en ce que, dans les formules qui y sont indiquées,
Y représente CN,
v représente méthyle ou méthoxyméthyle,
R₁ représente méthyle, éthyle, n-propyle ou n-butyle,
R₂ représente éthyle, n-propyle, n-butyle ou 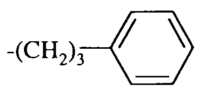 et
R₃ et R₄ représentent indépendamment l'un de l'autre éthyle ou n-propyle.

6. Mélange selon la revendication 1, caractérisé en ce que la proportion massique du colorant de formule I est de 5 à 95 % et celle du colorant de formule II est de 95 à 5 %, par rapport au mélange.

7. Mélange selon la revendication 1, caractérisé en ce que la proportion massique du colorant de formule I est de 10 à 90 % et celle du colorant de formule II est de 90 à 10 %, par rapport au mélange.

8. Mélange selon la revendication 1 caractérisé en ce qu'il contient un colorant de formule (A) 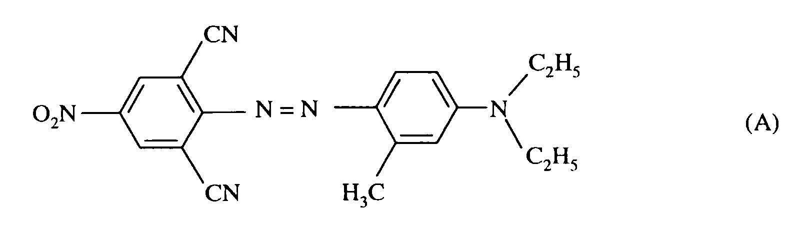 et au moins un colorant de formule (B) ou (C) 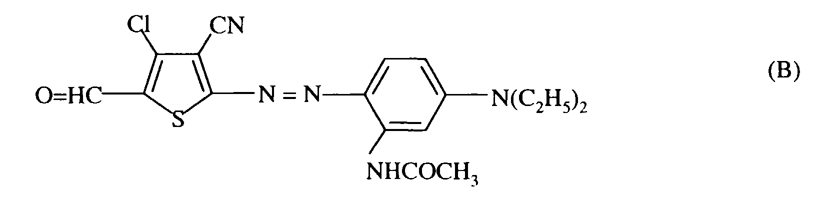 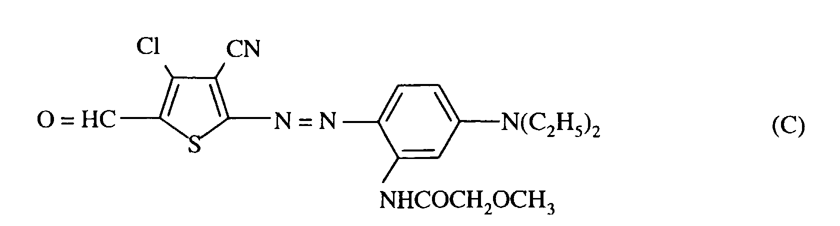 ou un colorant de formule (D) 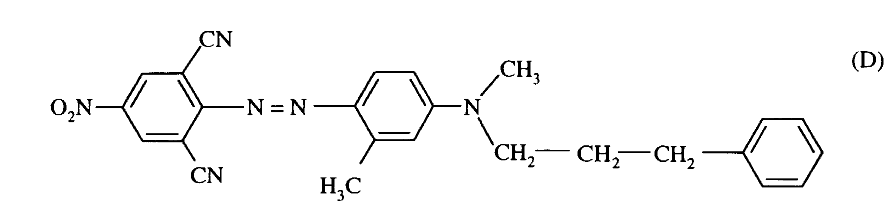 et au moins un colorant de formule (B) ou (C)

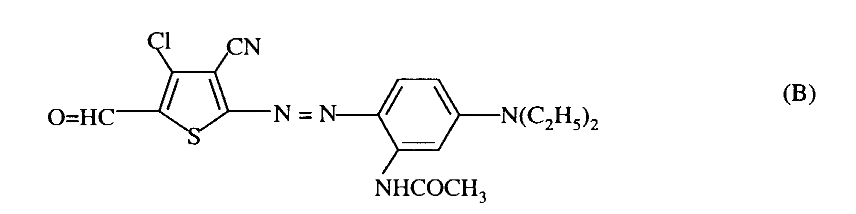

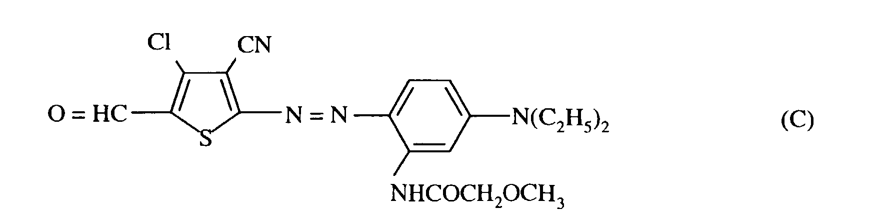

9. Préparation de colorants contenant
20 à 80 % en masse de mélanges de colorants selon la revendication 1, par rapport à la préparation,
80 à 20 % en masse de dispersants par rapport à la préparation, et éventuellement d'autres additifs.

10. Procédé de teinture de fibres synthétiques hydrophobes et de leurs mélanges avec des fibres naturelles, caractérisé en ce que l'on utilise des mélanges de colorants selon la revendication 1.
